# EUROPÄISCHE PATENTSCHRIFT

(11) **EP 2 110 339 B1**
(45) Veröffentlichungstag und Bekanntmachung des Hinweises auf die Patenterteilung: **20.07.2011**
(21) Anmeldenummer: 09003168.3
(22) Anmeldetag: 05.03.2009
(51) Int. Cl.: B65D 83/14

(54) **Ventilanordnung für einen unter Druck stehenden Fluidbehälter**
Valve assembly for a pressurised fluid container
Agencement de soupape pour un récipient de fluide sous pression

(30) Priorität: 17.04.2008 DE 102008019224
(43) Veröffentlichungstag der Anmeldung: 21.10.2009
(73) Patentinhaber: Lindal Dispenser GmbH, 23923 Schönberg (DE)
(72) Erfinder: Pittl, Oskar, 23627 Groß Grönau (DE); Horn, Michael, 25588 Oldenburg (DE)
(74) Vertreter: Vièl, Christof

(56) Entgegenhaltungen:
- EP-A- 2 028 131

## Beschreibung

Die vorliegende Erfindung betrifft eine Ventilanordnung für einen unter Druck stehenden Fluidbehälter zum Austragen von Schaum und anderen Medien.

Ventilanordnungen für unter Druck stehende Fluidbehälter, beispielsweise Aerosolbehälter oder dergleichen aber auch Druckbehälter für stärker viskose Medien wie Gele oder Schäume sind in verschiedenen Ausführungsformen bekannt.

Bei Ventilanordnungen für Fluidbehälter unterscheidet man zwischen federbetätigten Ventilkolben oder Verschlussgliedern und so genannten Kippventilen. Die erfindungsgemäße Ventilanordnung bezieht sich auf federbetätigte Ventile.

Es ist bekannt, zwischen Ventilkolben und Ventilkörper eine Schraubenfeder anzuordnen, die den Ventilkolben gegen eine Dichtfläche oder einen Ventilsitz vorspannt. Aus DE 197 10 541 ist eine Ventilanordnung bekannt geworden, bei der der Ventilkolben von einer Federzunge nach oben gegen einen Dichtsitz vorgespannt wird. Die Federzunge ist Teil einer Klammer, welche am Ventilkörper angebracht ist. Der Ventilkörper besteht aus Kunststoff, während die Klammer aus Federmetall geformt ist.

Aus EP 1 300 617 ist eine Ventilanordnung mit einem Ventilteller, einem in einer Öffnung des Ventiltellers angebrachten Ventilkörper, einem in einem Durchgangskanal des Ventilkörpers geführten Ventilkolben und einer Ventilkappe bekannt. Ein Abschnitt des Bodens der Kappe und ein unterer Abschnitt des Kolbens wirken teleskopisch derart zusammen, dass aufgrund elastischer Verformung auf den Kolben eine Federkraft erzeugt wird, die den Kolben gegen eine Dichtfläche des Ventilkörpers andrückt.

Bei den bekannten Ventilanordnungen fasst eine Ringnut des Ventilkörpers in einen inneren Abschnitt der Öffnung des Ventiltellers ein. Dabei kann aber der Ventilkörper bei der Befüllung des Behälters mit Treibmittel durch hohen Fülldruck nach innen ausgeworfen werden. Die Verbindung des Ventilkörpers mit dem Ventilteller kann bei größerer Belastung nachgeben.

Der Erfindung liegt die Aufgabe zugrunde, eine Ventilanordnung für einen unter Druck stehenden Fluidbehälter zu schaffen, die vollständig aus einfach zu fertigenden Teilen und materialunaufwendigen Kunststoffteilen zusammengesetzt ist und den Ventilkörper fester und sicherer im Ventilteller hält.

Die Aufgabe wird durch eine Ventilanordnung mit den Merkmalen aus Anspruch 1 gelöst. Vorteilhafte Ausgestaltungen bilden den Gegenstand der Unteransprüche.

Bei der erfindungsgemäßen Anordnung gemäß dem Oberbegriff von Anspruch 1 weist der Ventilkörper einen den Durchgangskanal begrenzenden Hals und mindestens ein Kragensegment auf. Zwischen Hals und dem mindestens einen Kragensegment ist eine von dem Fluidbehälter weg weisend offene Ringnut gebildet. In die Ringnut ist ein Pressring eingelassen, der in radialer Richtung eine Dicke aufweist, derart, dass das mindestens eine Kragensegment aufgespreizt gegen die Öffnung des Ventiltellers gedrückt ist.

Der aus Kunststoff bestehende Ventilkörper ist in die Öffnung des Ventiltellers eingesetzt, wobei das mindestens eine Kragensegment gegen die Kante des die Öffnung bildenden Tellerabschnitts gedrückt ist. In die Ringnut zwischen Hals und dem mindestens einen Kragensegment des Ventilkörpers ist ein Pressring eingesetzt. Der Pressring ist so dimensioniert, dass das mindestens eine Kragensegment radial von dem Hals weg gesprengt und gegen die Öffnung des Ventiltellers gedrückt wird. Diese Ausführung hat den Vorteil, dass der Ventilkörper stabiler und sicherer mit dem Ventilteller verbunden ist und auch bei hohem Druck in axialer Richtung, wie z.B. bei der Befüllung des Behälters, nicht nach innen in den Behälter ausgeworfen wird.

In einer bevorzugten Ausgestaltung ist die Öffnung des Ventiltellers durch einen abgebogenen Tellerabschnitt begrenzt. Hierbei ist der Teller im Bereich der Öffnung radial von dem Behälter weg weisend umgebogen, wodurch die Stabilität der Verbindung zwischen Ventilteller und dem mindestens einen Kragensegment erhöht ist.

Bevorzugt sitzt der abgebogene Tellerabschnitt klemmend unter einer Schulter des mindestens einen Kragensegments. Dadurch ist die Stabilität axial in Richtung des Behälters noch weiter erhöht.

In einer bevorzugten Ausgestaltung weist der Ventilteller einen umlaufenden Tellergrund auf und liegt in einem Übergangsbereich zwischen Grund und abgebogenen Tellerabschnitt flächig an dem Ventilkörper an. Hierdurch ist neben der Dichtigkeit auch die Sicherung des Ventilkörpers gegen axial von dem Behälter weg weisende Kräfte, wie sie z.B. ein etwaiger Überdruck in dem Behälter erzeugt, verbessert.

Bevorzugt liegt der Grund des Ventilkörpers flächig an dem Ventilkörper an. Hierdurch ist neben der Dichtigkeit auch die Sicherung des Ventilkörpers gegen axial von dem Behälter wegweisende Kräfte weiter verbessert.

In einer bevorzugten Ausgestaltung weist der Ventilkörper umlaufende Dichtvorsprünge auf, die an dem Ventilteller in dem Übergangsbereich zwischen dem Tellerabschnitt und dem Grund anliegen. Die Dichtvorsprünge können auch am Grund anliegen. Zwischen den Dichtvorsprüngen und dem Ventilteller kann über die Dichtvorsprünge eine gewisse Spannung aufgebaut werden, welche die Dichtwirkung in diesem Bereich erhöht.

In einer bevorzugten Ausgestaltung ist die Federanordnung mit dem Ventilkörper verbunden und weist mindestens einen Federabschnitt auf. Der mindestens eine Federabschnitt wirkt derart mit dem Ventilkolben zusammen, dass er den Ventilkolben in seine abdichtende Position an der Dichtfläche vorspannt. Die Vorspannung erzeugt eine Rückstellkraft in Richtung Dichtfläche für den Ventilkolben. Diese Rückstellkraft wird darüber hinaus vom Druck im Fluidbehälter verstärkt. Die beschriebene Rückstellfederwirkung kann so ausgelegt sein, dass der Ventilkolben an der Dichtfläche anliegt. Die Schließkraft zur Abdichtung kann dann im Wesentlichen vom Innendruck im Fluidbehälter aufgebracht werden. Der mindestens eine Federabschnitt ist so dimensioniert, dass eine ausreichende Durchgangsmöglichkeit für das Medium gegeben ist.

Zweckmäßigerweise besitzt die Federanordnung drei Federabschnitte.

In einer bevorzugten Ausgestaltung weist der Ventilkolben an seinem Umfang mindestens eine Dichtlippe auf, die so angeordnet ist, dass sie mit der Dichtfläche des Ventilkörpers dichtend zusammenwirkt. Zwischen der Dichtlippe und der Dichtfläche des Ventilkörpers kann über die Dichtlippe eine Spannung aufgebaut werden, welche die Dichtwirkung in diesem Bereich erhöht.

In einer bevorzugten Ausgestaltung weist die Federanordnung einen ringförmigen Abschnitt auf, der mit einem radial nach außen gerichteten Vorsprung in einen ringförmigen Abschnitt des Ventilkörpers schnappend eingreift. Die Position der Federanordnung wird so gegen radiale Verschiebungen gesichert. Das schnappende Zusammenwirken des Vorsprungs mit dem Ventilkörper erreicht auch, dass die Federanordnung bei großem Druck auf den mindestens einen Federabschnitt nicht in den Behälter hineinfallen kann.

Bevorzugt liegt der ringförmige Abschnitt der Federanordnung an seinem freien Ende an einem radialen Abschnitt des Ventilkörpers an, wodurch die Stabilität der Anordnung erhöht wird.

In einer bevorzugten Ausgestaltung ist außen an dem von dem Behälter fort weisenden Ende des Halses des Ventilkörpers mindestens eine umlaufende Zahnung angeordnet. Hierdurch ist die Dichtigkeit eines Rohrabschnitts eines Austragkopfes erhöht, der zum Austragen des Mediums auf den Hals aufgesteckt werden kann.

Eine bevorzugte Ausgestaltung der erfindungsgemäßen Ventilanordnung wird anhand der nachfolgenden Figuren näher erläutert. Es zeigt:
- Fig. 1: zeigt im Schnitt eine erfindungsgemäße Ventilanordnung

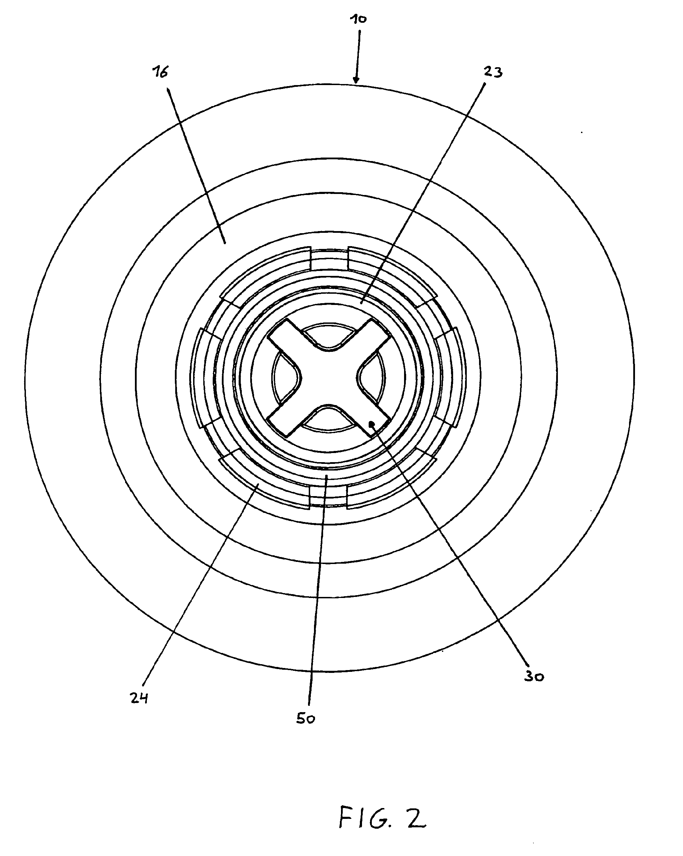

- Fig. 2: zeigt die Draufsicht der Ventilanordnung nach Fig. 1

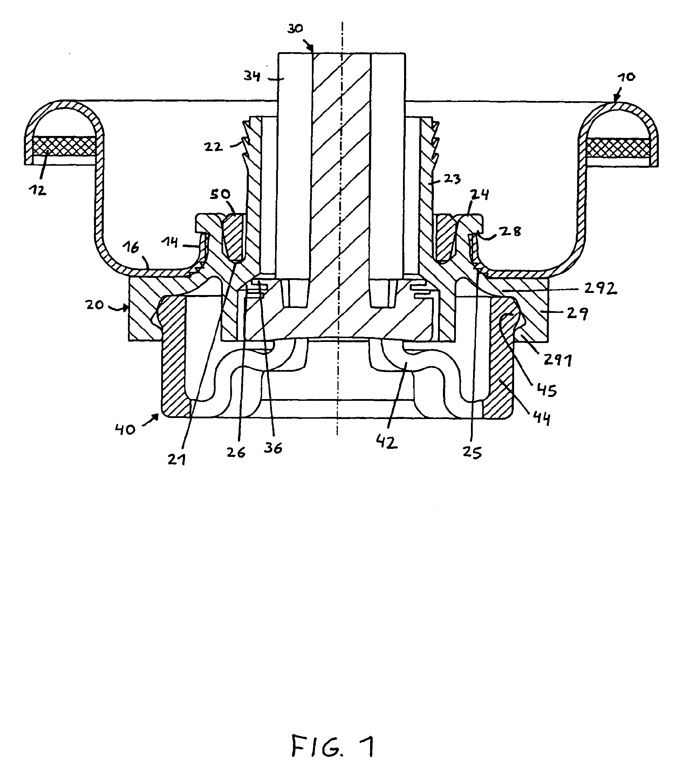

Die in Fig. 1 dargestellte Ventilanordnung für einen Fluidbehälter weist einen Ventilteller 10 auf, der über eine Außendichtung 12 an einen nicht gezeigten Fluidbehälter angebracht ist. In einer Öffnung des Ventiltellers 10 sitzt ein Ventilkörper 20 aus Kunststoffmaterial. Der Ventilkörper 20 nimmt in einer Durchgangsöffnung einen Ventilkolben 30 auf. Des Weiteren ist eine Federanordnung 40 an dem Ventilkörper 20 befestigt. Ein Pressring 50 ist als separates Bauteil ausgebildet und auf der vom Fluidbehälter abgewandten Seite an dem Ventilkörper angeordnet. Nachfolgend werden die einzelnen Teile der Ventilanordnung nach Fig. 1 erläutert.

Der Ventilkörper 20 weist einen Hals 23 auf, der die Durchgangsöffnung begrenzt. Am freien Ende des Halses 23 ist an seiner Außenwand eine umlaufende Zahnung 22 angeordnet, die zur Austrittsöffnung hin geneigte Lamellen besitzt. Das andere, feste Ende des Halses 23 mündet in eine Ringnut 21, die zwischen dem festen Ende des Halses 23 und umlaufenden, beabstandeten Kragensegmenten 24 des Ventilkörpers 20 gebildet ist. Die Kragensegmente 24 weisen jeweils eine Schulter 28 auf, die über einen abgebogenen Abschnitt 14 des Ventiltellers greift. In die Ringnut 21 ist der Pressring 50 eingesetzt, der die Kragensegmente radial nach außen gegen den abgebogenen Abschnitt 14 des Ventiltellers 10 presst.

Der Ventilteller 10 weist einen umlaufenden Grund 16 auf, der zur Öffnung hin in den abgebogenen Abschnitt 14 übergeht. Der Ventilkörper liegt an dem Grund 16 des Ventiltellers 10 und dem abgebogenen Abschnitt 14 bis unter die Schultern 28 der Kragensegmente 24 an. Im Übergangsbereich zwischen dem Grund 16 und dem abgebogenen Abschnitt 14 weist der Ventilkörper 20 Dichtvorsprünge 25 auf, die dicht an dem Ventilteller 10 anliegen. Durch die konstruktive Ausbildung der Schultern 28 und der Dichtvorsprünge 25 ist ein dichtes und sicherndes Zusammenwirken zwischen Ventilkörper 20 und Ventilteller 10 geschaffen.

Der Schaft 34 des Ventilkolbens 30 ist in der Durchgangsöffnung an der Innenwand des Halses 23 geführt und weist einen Querschnitt auf, der eine sichere Führung ermöglicht und gleichzeitig eine Durchgangsmöglichkeit für das austretende Medium bietet. Bei dem Querschnitt kann es sich um einen sternförmigen oder, wie in der Figur gezeigt, einen kreuzförmigen handeln. Im Übergangsbereich zum Hals 23 ist die Durchgangsöffnung des Ventilkörpers 20 konisch verjüngt. Dieser verjüngende Abschnitt bildet die umlaufende Dichtfläche 26. Auf der dem Behälter zugewandten Seite weist der Ventilkolben 30 einen größeren Durchmesser auf. Im Übergang zum Schaft 34 ist der Ventilkolben 30 entsprechend der Dichtfläche 26 ausgebildet, so dass er dichtend an ihr anliegt. Entlang seines Umfangs weist der Ventilkolben 30 Dichtlippen 36 auf, die mit der Dichtfläche 26 dichtend zusammenwirken.

Die Federanordnung 40 umfasst Federabschnitte 42 und einen ringförmigen Abschnitt 44. Der ringförmige Abschnitt 44 weist einen Vorsprung 45 auf, der als eine Verdickung am radial nach außen weisenden Rand des ringförmigen Abschnitts 44 gebildet ist. Der Ventilkörper 20 weist einen Ringabschnitt 29 mit einem Vorsprung 291 auf, der als eine Verdickung am radial nach innen weisenden Rand des Ringabschnitts 29 gebildet ist. Bei der Montage wird die Federanordnung 40 von unten gegen den Ventilkörper 20 gedrückt, wobei die Vorsprünge 45 und 291 übereinander gleiten und einschnappen, um die Federanordnung 40 wirksam am Ventilkörper 20 festzulegen. Das freie Ende des ringförmigen Abschnitts 44 kommt dabei an einem sich radial erstreckenden Abschnitt 292 des Ventilkörpers 20 zur Anlage, sodass die Federanordnung 40 sowohl radial als auch axial gesichert am Ventilkörper 20 gehalten ist.

Die Federabschnitte 42 sind im montierten Zustand bereits vorgespannt und bringen den Ventilkolben 30 dichtend mit der Dichtfläche 26 des Ventilkörpers 20 in Eingriff. Wird der Ventilkolben 30 durch Druck in den Behälter bewegt, werden die Federabschnitte 42 weiter gespreizt und erhöhen die Federkraft, sodass eine ausreichende Rückstellkraft aufgebaut wird, die den Ventilkolben 30 beim Wegfall der Kraft zurückstellt. Die Federabschnitte 42 verhindern aber auch ein zu tiefes Eindrücken des Ventilkolbens 30 in den Behälter, wodurch der Ventilkolben 30 verkanten könnte und in der Folge das Ventil nicht mehr schließt.

## Patentansprüche

1. Ventilanordnung für einen unter Druck stehenden Fluidbehälter, mit
- einem Ventilteller (10), der mit einem Fluidbehälter dichtend verbindbar ist
- einem in einer Öffnung des Ventiltellers (10) festlegbaren Ventilkörper (20) aus Kunststoff,
- einem Ventilkolben (30) aus Kunststoff, der in einem Durchgangskanal des Ventilkörpers (20) geführt ist und mit einer Dichtfläche (26) des Ventilkörpers zusammenwirkt und
- einer mit dem Ventilkörper (20) zusammenwirkenden Federanordnung (40), welche den Ventilkolben (30) gegen die Dichtfläche (26) des Ventilkörpers (20) drückt,
**dadurch gekennzeichnet, dass** der Ventilkörper (20) einen den Durchgangskanal begrenzenden Hals (23) und mindestens ein Kragensegment (24) aufweist, wobei zwischen dem Hals (23) und dem mindestens einen Kragensegment (24) eine Ringnut (21) gebildet ist und in die Ringnut (21) ein Preßring (50)eingelassen ist, der in radialer Richtung eine Dicke besitzt, derart, dass das mindestens eine Kragensegment (24) aufgespreizt gegen die Öffnung des Ventiltellers (10) gedrückt ist.

2. Ventilanordnung nach Anspruch 1, **dadurch gekennzeichnet, dass** die Öffnung des Ventiltellers (10) durch einen abgebogenen Tellerabschnitt (14) begrenzt ist.

3. Ventilanordnung nach Anspruch 2, **dadurch gekennzeichnet, dass** der abgebogene Tellerabschnitt (14) klemmend unter einer Schulter (28) des mindestens einen Kragensegments (24) einsitzt.

4. Ventilanordnung nach Anspruch 2 oder 3, **dadurch gekennzeichnet, dass** der Ventilteller (10) einen umlaufenden Grund (16) aufweist und in einem Übergangsbereich zwischen Grund und abgebogenen Tellerabschnitt (14) flächig an dem Ventilkörper (20) anliegt.

5. Ventilanordnung nach Anspruch 4, **dadurch gekennzeichnet, dass** der Grund (16) des Ventiltellers (10) flächig an dem Ventilkörper (20) anliegt.

6. Ventilanordnung nach Anspruch 4 oder 5, **dadurch gekennzeichnet, dass** der Ventilkörper (20) umlaufende Dichtvorsprünge (25) aufweist, die an dem Ventilteller (10) in dem Übergangsbereich zwischen dem Tellerabschnitt (14) und dem Grund (16) oder am Grund (16) anliegen.

7. Ventilanordnung nach Anspruch 4 oder 5, **dadurch gekennzeichnet, dass** der Ventilkörper (20) umlaufende Dichtvorsprünge (25) aufweist, die an dem Ventilteller (10) in dem Übergangsbereich zwischen dem Tellerabschnitt (14) und dem Grund (16) und am Grund (16) anliegen.

8. Ventilanordnung nach einem der Ansprüche 1 bis 7, **dadurch gekennzeichnet, dass** mit dem Ventilkörper (20) eine Federanordnung (40) verbunden ist und mindestens ein Federabschnitt (42) der Federanordnung (40) und der Ventilkolben (30) zusammenwirken, wobei der mindestens eine Federabschnitt (42) den Ventilkolben (30) in seine abdichtende Position an der Dichtfläche (26) vorspannt.

9. Ventilanordnung nach Anspruch 8, **dadurch gekennzeichnet, dass** drei Federabschnitte (42) vorgesehen sind.

10. Ventilanordnung nach einem der Ansprüche 1 bis 9, **dadurch gekennzeichnet, dass** der Ventilkolben (30) an seinem Umfang mindestens eine Dichtlippe (36) aufweist, die so angeordnet ist, dass sie mit der Dichtfläche (26) des Ventilkörpers (20) dichtend zusammenwirkt.

11. Ventilanordnung nach einem der Ansprüche 1 bis 10, **dadurch gekennzeichnet, dass** die Federanordnung (40) einen ringförmigen Abschnitt (44) aufweist, der mit einem radial nach außen gerichteten Vorsprung (45) in einen ringförmigen Abschnitt (29) des Ventilkörpers (20) schnappend eingreift.

12. Ventilanordnung nach Anspruch 11, **dadurch gekennzeichnet, dass** der ringförmige Abschnitt (44) der Federanordnung (40) an seinem freien Ende an einem radialen Abschnitt (292) des Ventilkörpers (20) anliegt.

13. Ventilanordnung nach einem der Ansprüche 1 bis 12, **dadurch gekennzeichnet, dass** außen an dem von dem Behälter weg weisenden Ende des Halses (23) des Ventilkörpers (20) mindestens eine umlaufende Zahnung (22) angeordnet ist.

## Claims

1. Valve assembly for a pressurized fluid container, having
- a valve disc (10) which may be sealingly connected to a fluid container,
- a valve body (20) made of plastics, which may be secured in an opening of the valve disc (10),
- a valve piston (30) made of plastics, which is guided in a through-channel of the valve body (20) and interacts with a sealing surface (26) of the valve body, and
- a spring arrangement (40) that interacts with the valve body (20) and presses the valve piston (30) against the sealing surface (26) of the valve body (20),
**characterised in that** the valve body (20) has a neck (23) defining the through-channel and at least one collar segment (24), an annular groove (21) being formed between the neck (23) and the at least one collar segment (24), and a press ring (50) being seated in the annular groove (21) and being of such radial thickness as to press the at least one collar segment (24) in expanded manner against the opening of the valve disc (10).

2. Valve assembly according to claim 1, **characterised in that** the opening in the valve disc (10) is defined by a bent-back disc portion (14).

3. Valve assembly according to claim 2, **characterised in that** the bent-back disc portion (14) is clamped under a shoulder (28) of the at least one collar segment (24).

4. Valve assembly according to claim 2 or 3, **characterised in that** the valve disc (10) has a peripheral base (16) and, in a transition area between the base and the bent-back disc portion (14), abuts flat on the valve body (20).

5. Valve assembly according to claim 4, **characterised in that** the base (16) of the valve disc (10) abuts flat on the valve body (20).

6. Valve assembly according to claim 4 or 5, **characterised in that** the valve body (20) has peripheral sealing projections (25) which abut on the valve disc (10) in the transition area between the disc portion (14) and the base (16), or on the base (16).

7. Valve assembly according to claim 4 or 5, **characterised in that** the valve body (20) has peripheral sealing projections (25) which abut on the valve disc (10) in the transition area between the disc portion (14) and the base (16), and on the base (16).

8. Valve assembly according to one of the claims 1 to 7, **characterised in that** a spring arrangement (40) is connected to the valve body (20), and at least one spring portion (42) of the spring assembly (40) and the valve piston (30) interact, the at least one spring portion (42) pre-tensioning the valve piston (30) in its sealing position on the sealing surface (26).

9. Valve assembly according to claim 8, **characterised in that** three spring portions (42) are provided.

10. Valve assembly according to one of the claims 1 to 9, **characterised in that**, at its periphery, the valve piston (30) has at least one sealing lip (36), which is disposed such that it interacts sealingly with the sealing surface (26) of the valve body (20).

11. Valve assembly according to one of the claims 1 to 10, **characterised in that** the spring assembly (40) has an annular portion (44), an outwardly oriented radial projection (45) of which snaps into an annular portion (29) of the valve body (20).

12. Valve assembly according to claim 11, **characterised in that**, at its free end, the annular portion (44) of the spring arrangement (40) abuts on a radial portion (292) of the valve body (20).

13. Valve assembly according to one of the claims 1 to 12, **characterised in that** at least one peripheral toothing (22) is arranged on the outside of the neck (23) of the valve body (20), at the end facing away from the container.

## Revendications

1. Dispositif de valve pour un récipient contenant un fluide sous pression avec
- une coupelle (10) pouvant être reliée de façon étanche avec un récipient contenant un fluide,
- un corps de valve (20) en matière plastique pouvant être fixé dans une ouverture de la coupelle,
- un piston de valve (30) en matière plastique, qui est guidé dans un canal de passage du corps de valve (20) et qui coopère avec une surface d'étanchéité (26) du corps de valve, et
- un dispositif ressort (40) coopérant avec le corps de valve (20) et qui pousse le piston de valve (30) contre la surface d'étanchéité (26) du corps de valve (20),
**caractérisé en ce que** le corps de valve (20) est muni d'un col (23) limitant le canal de passage et d'au moins un élément en collet (24), une gorge annulaire (21) étant formée entre le col (23) et le au mois un élément en collet (24) et un anneau de serrage (50) étant introduit dans la gorge annulaire (21), lequel anneau présente une épaisseur dans la direction radiale telle que le au moins un élément en collet (24) est écarté contre l'ouverture de la coupelle (10).

2. Dispositif de valve selon la revendication 1, **caractérisé en ce que** l'ouverture de la coupelle (10) est limitée par une partie d'assiette (14) courbée.

3. Dispositif de valve selon la revendication 2, **caractérisé en ce que** la partie d'assiette courbée (14) est logée de façon serrée sous un épaulement (28) du au moins un élément en collet (24).

4. Dispositif de valve selon la revendication 2 ou 3, **caractérisé en ce que** la coupelle (10) est munie d'une base (16) et elle s'appuie à plat contre le corps de valve (20) dans une zone de transition située entre la base et la partie d'assiette courbée (14).

5. Dispositif selon la revendication 4, **caractérisé en ce que** la base (16) de la coupelle (10) s'appuie à plat contre le corps de valve (20).

6. Dispositif de valve selon la revendication 4 ou 5, **caractérisé en ce que** le corps de valve (20) est muni de saillies d'étanchéité (25) qui s'appuient contre la coupelle (10) dans la zone de transition entre la partie d'assiette (14) et la base (16) ou contre la base (16).

7. Dispositif de valve selon la revendication 4 ou 5, **caractérisé en ce que** le corps de valve (20) est muni de saillies d'étanchéité (25) qui s'appuient contre la coupelle (10) dans la zone de transition entre la partie d'assiette (14) et la base (16) et contre la base (16).

8. Dispositif de valve selon l'une des revendications 1 à 7, **caractérisé en ce qu'**un dispositif ressort (40) est relié au corps de valve (20) et au moins une zone ressort (42) du dispositif ressort (40) coopère avec le piston de valve (30), la au moins une zone ressort (42) mettant sous contrainte le piston de valve (30) dans sa position d'étanchéité contre la surface d'étanchéité (26).

9. Dispositif de valve selon la revendication 8, **caractérisé en ce que** trois zones ressort (42) sont prévues.

10. Dispositif de valve selon l'une des revendications 1 à 9, **caractérisé en ce que** le piston de valve (30) est muni sur sa circonférence d'au moins une lèvre d'étanchéité (36) qui est placée de telle sorte qu'elle coopère avec la surface d'étanchéité (26) du corps de valve (20) de façon à assurer l'étanchéité.

11. Dispositif de valve selon l'une des revendications 1 à 10, **caractérisé en ce que** le dispositif ressort (40) est muni d'une section annulaire (44) qui se met en prise par encliquetage avec une saillie (45) dirigée radialement vers l'extérieur dans une section annulaire (29) du corps de valve (20)

12. Dispositif de valve selon la revendication 11, **caractérisé en ce que** la section annulaire (44) du dispositif ressort (40) s'appuie avec son extrémité libre contre une section radiale (292) du corps de valve (20).

13. Dispositif de valve selon l'une des revendications 1 à 12, **caractérisé en ce qu'**au moins une denture circulaire est disposée à l'extérieur sur l'extrémité du col (23) du corps de valve (20) opposée au récipient.
